# EUROPEAN PATENT APPLICATION

(11) **EP 4 741 288 A1**
(43) Date of publication of application: **13.05.2026**
(21) Application number: 24835765.9
(22) Date of filing: 10.04.2024
(51) Int. Cl.: B64D 27/02, B64C 30/00, B64D 27/40, B64D 33/00, F02K 7/16

(54) **COMBINED ENGINE AND AIRCRAFT**

(30) Priority: 03.07.2023 JP 2023109294
(71) Applicant: Japan Aerospace Exploration Agency, Tokyo 182-8522 (JP)
(72) Inventor: TAGUCHI, Hideyuki, Chofu-shi, Tokyo 182-8522 (JP); IMAMURA, Shunsuke, Chofu-shi, Tokyo 182-8522 (JP); TOMIOKA, Sadatake, Chofu-shi, Tokyo 182-8522 (JP)
(74) Representative: impuls legal PartG mbB
(86) International application number: PCT/JP2024/014531
(87) International publication number: WO 2025/009243

(57) **Abstract**

This combined engine includes a flow path part having a first and second flow paths, a first engine, and a second engine, as well as a switching part. The switching part includes: a rotation member capable of rotating between a first position for opening the first flow path and a second position for closing the first flow path; and a slide member for rotating the rotation member between the first position and the second position.

## Description

### Technical Field

The present disclosure relates to a combined engine and an aircraft.

### Background Art

In the related art, an aircraft including a combined engine is known (for example, see Patent Literature (hereinafter, referred to as "PTL") 1. The combined engine includes a plurality of engines corresponding to a plurality of speed ranges. In the combined engine, a movable element that can switch between opening and closing of an air flow passage of each of the plurality of engines is provided. In this configuration, the movable element pivots up and down to switch between two air flow passages.

### Citation List

### Patent Literature

PTL 1
Japanese Patent Application Laid-Open No. 2004-270691

### Summary of Invention

### Technical Problem

However, since the movable element is subjected to pressure, the movable element is difficult to operate due to the influence of the pressure in a case of switching the air flow passage, and as a result, there is a problem that the switching of the flow passage cannot be smoothly performed. Since the configuration disclosed in PTL 1 does not disclose a mechanism for pivoting the movable element, the above-described problem cannot be solved.

An object of the present disclosure is to provide a combined engine and an aircraft capable of smoothly switching a flow passage.

### Solution to Problem

A combined engine according to the present disclosure is a combined engine to be mounted on an aircraft, and includes:
a first engine corresponding to a first speed range;
a second engine corresponding to a second speed range higher than the first speed range;
a flow passage section including a first flow passage that is an air flow passage of the first engine and a second flow passage that is an air flow passage of the second engine; and
a switching section capable of switching between opening and closing of the first flow passage in the flow passage section, wherein
the switching section includes:
   a pivotable member that is pivotable between a first position where the first flow passage is opened and a second position where the first flow passage is closed, and
   a slide member that moves slidingly to pivot the pivotable member between the first position and the second position.

An aircraft according to the present disclosure includes:
an airframe; and
the combined engine described above that is provided on a lower surface of the airframe, wherein
a surface of the lower surface of the airframe which extends from a nose section of the airframe to the combined engine is inclined to be located lower toward the combined engine from the nose section.

### Advantageous Effects of Invention

According to the present disclosure, the flow passage can be smoothly switched.

### Brief Description of Drawings

FIG. 1 is a diagram showing an aircraft including a combined engine according to Embodiment 1 of the present disclosure;
FIG. 2 is a perspective view of the aircraft as viewed from below;
FIG. 3 is a side view of the aircraft;
FIG. 4 is a side view of the aircraft;
FIG. 5 is a perspective view of a first switching section;
FIG. 6 is a side view of the first switching section at a first position;
FIG. 7 is a side view of the first switching section at a second position;
FIG. 8 is a perspective view of a second switching section;
FIG. 9 is a side view of the second switching section at a third position;
FIG. 10 is a side view of the second switching section at a fourth position;
FIG. 11 is a diagram showing an aircraft including a combined engine according to Embodiment 2 of the present disclosure;
FIG. 12 is a side cross-sectional view of a first duct portion in the combined engine;
FIG. 13 is a side cross-sectional view of a second duct portion in the combined engine;
FIG. 14 is a diagram showing a switching section in a state where a first inlet is opened; and
FIG. 15 is a diagram showing a switching section in a state where a second inlet is opened.

### Description of Embodiments

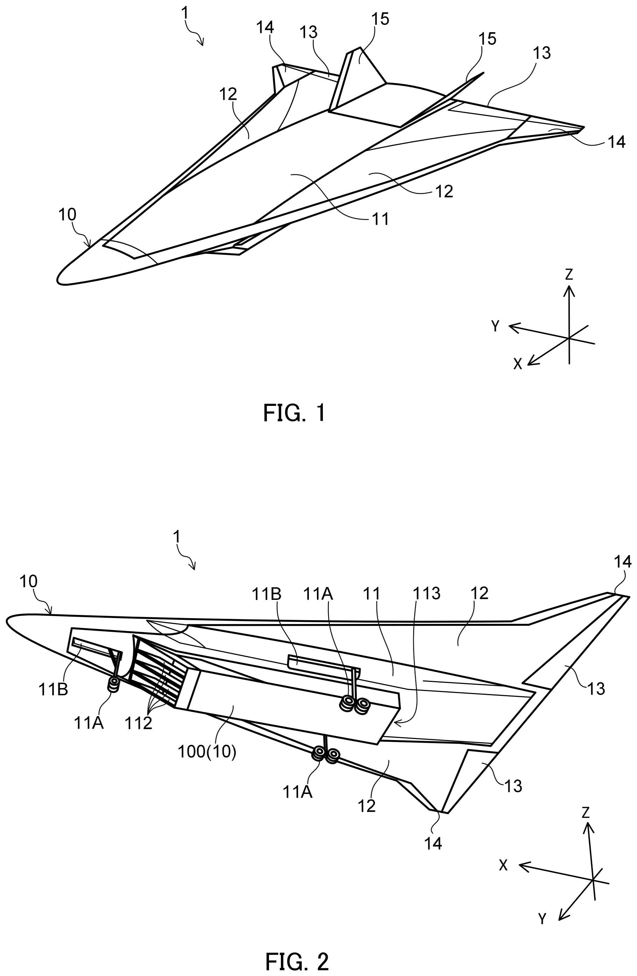

Embodiment 1 of the present disclosure is elaborated below with reference to the drawings. FIG. 1 is a diagram showing an aircraft including a combined engine according to Embodiment 1 of the present disclosure. In addition, in describing a structure of aircraft 1 of the present embodiment, a rectangular coordinate system shown in each drawing will be used. Aircraft 1 is disposed such that, for example, when aircraft 1 is located on the ground, the X direction is a front-rear direction, the Y direction is a left-right direction, and the Z direction is an up-down direction.

As shown in FIG. 1, aircraft 1 is, for example, a hypersonic aircraft capable of flying at a hypersonic speed of Mach 5 or more in the atmosphere, and includes airframe 10 and combined engine 100. Aircraft 1 has a shape (so-called waverider configuration) in which a pressure on a lower surface of airframe 10 is increased by a shock wave generated at a leading edge of airframe 10 (main wing portion) to generate a large lift.

Airframe 10 is configured to have a substantially triangular shape as viewed in the Z direction, and includes fuselage section 11, main wings 12, control wings 13, outer wings 14, and vertical tail wings 15.

Fuselage section 11 is a section constituting a fuselage of aircraft 1, and is located at a central portion of airframe 10 in the Y direction. A portion of fuselage section 11 near the end portion on the + side in the X direction is a passenger cabin (not shown). A portion of fuselage section 11 on the - side in the X direction with respect to the passenger cabin is a portion (not shown) that stores a fuel tank. A heat insulating material is provided around the passenger cabin and the fuel tank.

As shown in FIG. 2, landing gears 11A are provided on a surface (lower surface) of fuselage section 11 on the - side in the Z direction. Landing gears 11A include one landing gear disposed on a portion of fuselage section 11 on the + side in the X direction and two landing gears disposed on a portion of fuselage section 11 on the - side in the X direction. In addition, storage sections 11B for storing landing gears 11A are provided in portions of fuselage section 11 corresponding to landing gears 11A. Landing gears 11A are pivotable between a position in storage sections 11B and a position outside storage sections 11B, and are accommodated in storage sections 11B during flight of aircraft 1.

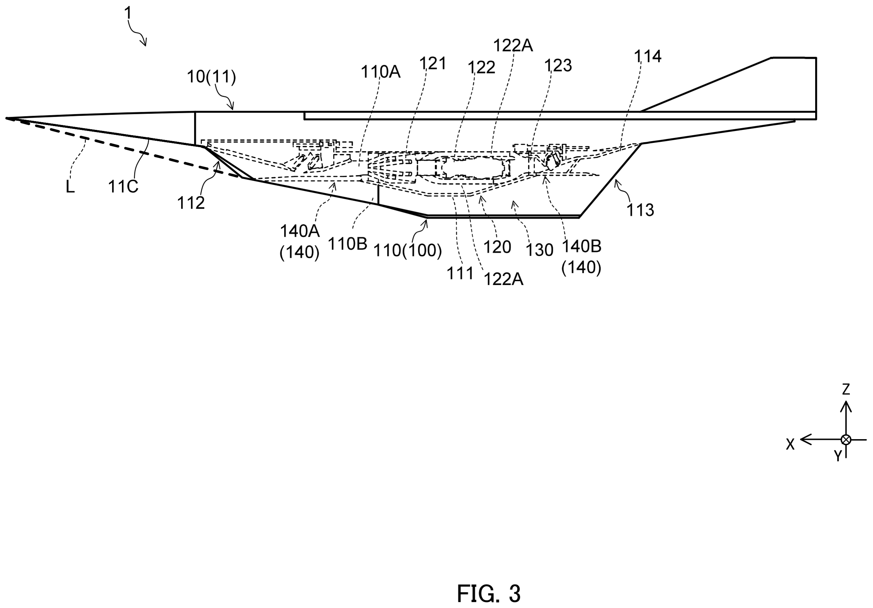

In addition, combined engine 100 is provided on the surface (lower surface) of fuselage section 11 on the - side in the Z direction. In addition, as shown in FIG. 3, surface 11C of fuselage section 11 from the nose section of airframe 10 to combined engine 100 (housing 110 described below) on the surface of fuselage section 11 on the - side in the Z direction is inclined to be located on the - side (lower side) in the Z direction from the nose section toward combined engine 100. Specifically, the angle of surface 11C with respect to the X direction (horizontal direction) is smaller than the angle of line L with respect to the X direction, the line L connecting the nose section of airframe 10 to a lower edge portion of combined engine 100 (inlet 112 of housing 110 described below).

As shown in FIG. 1, main wings 12 are disposed at the opposite end portions of fuselage section 11 in the Y direction. Main wings 12 are provided over substantially entire fuselage section 11 in the X direction. Main wings 12 are configured to extend from fuselage section 11 such that a protrusion amount from fuselage section 11 increases toward the - side in the X direction.

In addition, surfaces (upper surfaces) of fuselage section 11 and main wings 12 on the + side in the Z direction are configured to be substantially parallel to an XY plane such that the surfaces do not interfere with air (see FIG. 3).

Control wings 13 are provided at end portions (tailing ends) of main wings 12 on the - side in the X direction (see FIG. 2). Control wings 13 are provided on main wings 12 such that a height of a trailing edge is constant at a neutral position. In other words, the height of main wings 12 is set such that the height of trailing edges of control wings 13 is constant at the neutral position.

Outer wings 14 adjust an aerodynamic center to maintain a flight orientation of airframe 10, and are provided at end portions of respective main wings 12 on the - side in the X direction at end portions of main wing 12 in the Y direction.

Vertical tail wings 15 include two vertical tail wings disposed on the upper surface (surface of main wings 12 on the + side in the Z direction) at tailing end portions (on the - side in the X direction) of main wings 12. Two vertical tail wings 15 are disposed to be inclined to be spaced from each other toward the + side in the Z direction. As a result, when airframe 10 flies at a high angle of attack with respect to the airflow, vertical tail wings 15 can obtain directional stability such that vertical tail wings 15 are not hidden behind main wings 12 as viewed from the upstream side of the airflow.

As shown in FIG. 3, combined engine 100 is provided with two types of engines, and is provided on the surface of fuselage section 11 on the - side in the Z direction. By providing combined engine 100 on the surface (lower surface) of fuselage section 11 on the - side in the Z direction, the air in which the pressure is increased by the shock wave generated on the lower surface can be taken into combined engine 100, and as a result, the thrust of the engine can be increased. Combined engine 100 includes housing 110, first engine 120, second engine 130, and switching section 140.

Housing 110 accommodates first engine 120 and second engine 130. Isolation wall 111 is provided inside housing 110. Isolation wall 111 is provided to isolate first engine 120 and second engine 130 from each other. First engine 120 is disposed in a space on the + side in the Z direction with respect to isolation wall 111, and second engine 130 is disposed in a space on the - side in the Z direction with respect to isolation wall 111.

Inlet 112 of air flowing toward first engine 120 or second engine 130 is provided on the + side in the X direction of housing 110. Outlet 113 of air discharged from first engine 120 or second engine 130 is provided in housing 110 on the - side in the X direction. A movable wall is mounted near inlet 112 and outlet 113 in housing 110, and optimal air inflow and combustion gas discharge can be performed according to the flight speed.

First engine 120 is a turbojet engine corresponding to the first speed range. The first speed range may be, for example, a speed range from takeoff (Mach 0) to Mach 5. First engine 120 includes precooler 121, turbojet 122, and ram combustor 123.

Precooler 121 is provided on the + side in the X direction with respect to turbojet 122. Precooler 121 can alleviate aerodynamic heating during high-speed flight of aircraft 1, and as a result, continuous operation in the first speed range is possible.

Ram combustor 123 is provided on the - side in the X direction with respect to turbojet 122. In first engine 120, the air flowing in from inlet 112 is discharged from outlet 113 through precooler 121, turbojet 122, and ram combustor 123.

In addition, in first engine 120, duct 122A that can introduce air into ram combustor 123 without the air passing through turbojet 122 is provided. As a result, first engine 120 can operate as a turbo-ramjet according to a need of a flight plan of aircraft 1.

Second engine 130 is a scramjet engine corresponding to a speed range (second speed range) different from first engine 120. The second speed range may be, for example, a speed range of Mach 5 or more. Second engine 130 may have, for example, a known configuration.

In second engine 130, the air passing through inlet 112 is introduced into the scram combustor, and the exhaust gas heated to a high temperature by supersonic combustion in the scram combustor passes through outlet 113 and is discharged behind airframe 10. In this case, a lift that pushes airframe 10 to the + side in the Z direction is generated on a portion of housing 110 on the - side in the X direction of inlet 112 and a portion of housing 110 on the + side in the X direction of outlet 113. In addition, a drag that pushes airframe 10 rearward (on the - side in the X direction) is generated on inlet 112 portion, and a thrust that pushes airframe 10 forward (on the + side in the X direction) is generated on outlet 113 portion. In this case, since the pressure is increased by the supersonic combustion in the scram combustor, the thrust at outlet 113 is larger than the drag at inlet 112, and thus the thrust that pushes entire airframe 10 to the + side in the X direction is generated.

Switching section 140 is provided in housing 110, and switches an air flow passage in housing 110 to any one of first flow passage 110A or second flow passage 110B. That is, switching section 140 is configured to be switchable between opening and closing of first flow passage 110A and second flow passage 110B in housing 110.

First flow passage 110A is an air flow passage corresponding to first engine 120, and is a flow passage corresponding to the space on the + side in the Z direction with respect to isolation wall 111. When air is introduced into first flow passage 110A, air is also supplied to the space on the - side in the Z direction with respect to isolation wall 111.

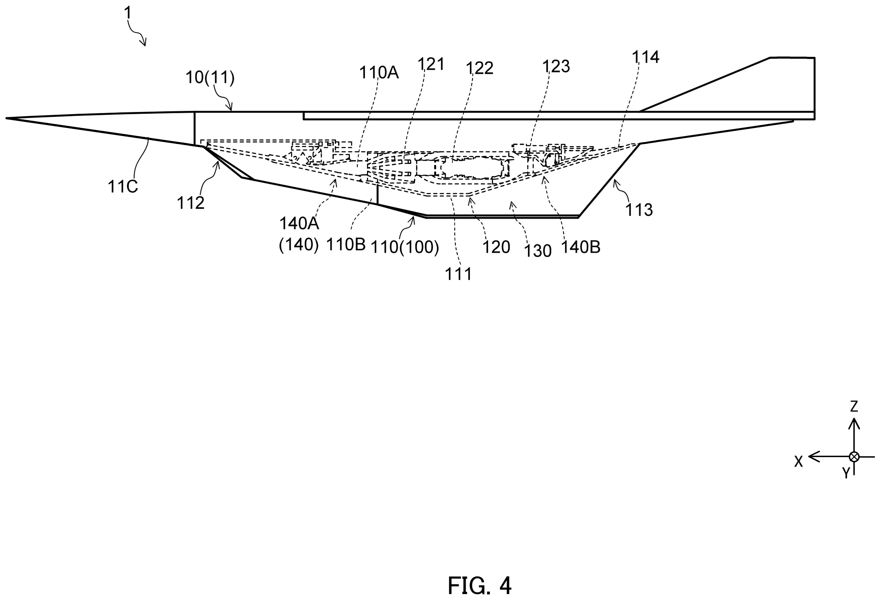

Second flow passage 110B is an air flow passage corresponding to second engine 130, and is a flow passage corresponding to the space on the - side in the Z direction with respect to isolation wall 111. When air is introduced into second flow passage 110B to operate second engine 130, the space on the + side in the Z direction with respect to isolation wall 111 is in a state of being closed with respect to inlet 112 by switching section 140, as shown in FIG. 4. Housing 110 corresponds to a "flow passage section" of the present disclosure.

Switching section 140 includes first switching section 140A and second switching section 140B. First switching section 140A is provided in housing 110 on the + side in the X direction of inlet 112, and is configured to be capable of selecting whether to flow the air flowing in from inlet 112 to first flow passage 110A or to the second flow passage. Second switching section 140B is provided at outlet 113 of housing 110, and is configured to be capable of switching between the first flow passage and the second flow passage for an air flow passage flowing out to an upper side in the Z direction of outlet 113.

To begin with, details of first switching section 140A will be described.

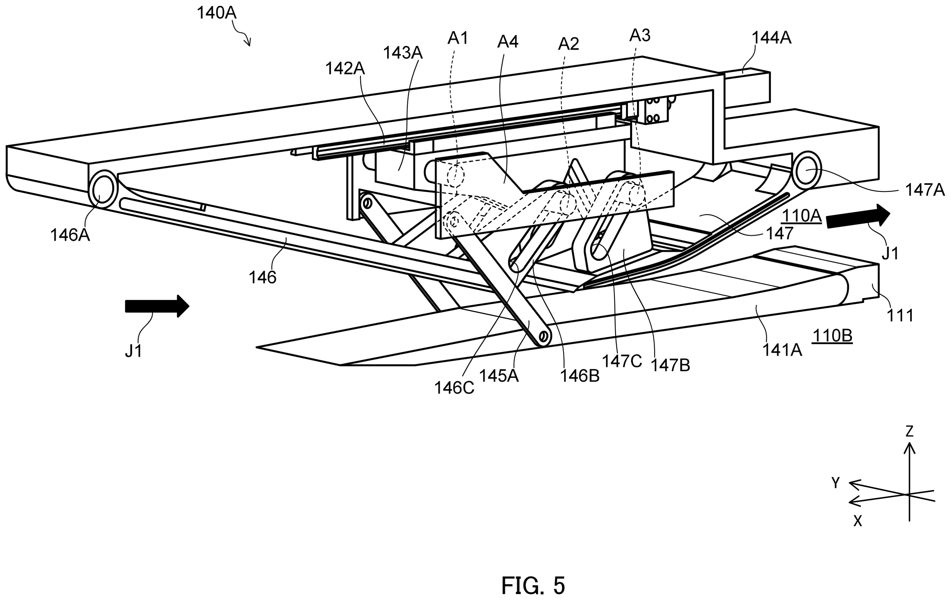

First switching section 140A is disposed on the + side in the Z direction with respect to isolation wall 111 and on the + side in the X direction with respect to first engine 120. As shown in FIG. 5, first switching section 140A includes pivotable member 141A, guide rail 142A, slide member 143A, actuator 144A, link members 145A, first facing member 146, and second facing member 147.

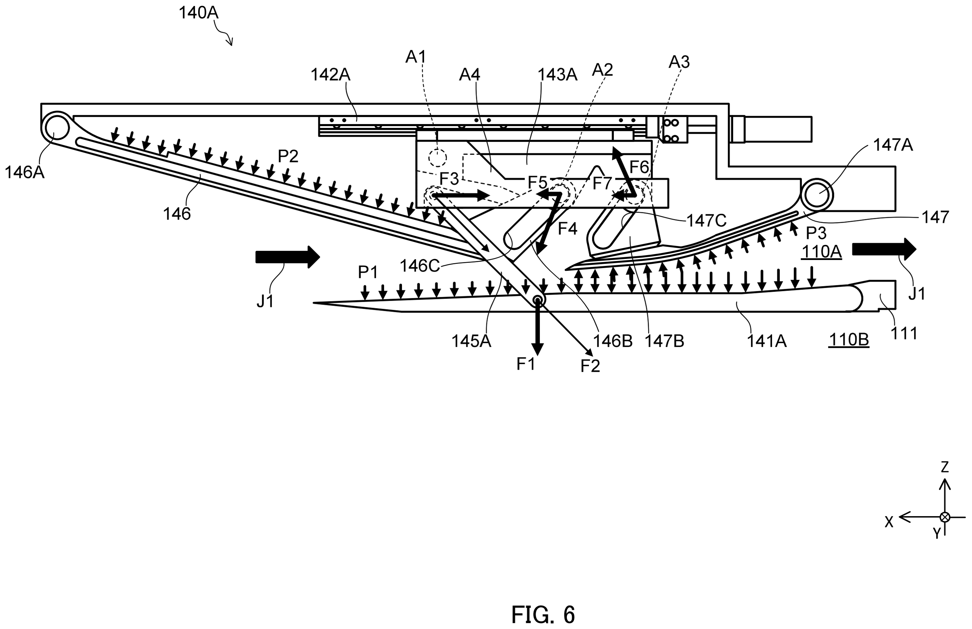

Pivotable member 141A is supported to be pivotable about a base end portion at a front end portion (end portion on the + side in the X direction) of isolation wall 111. The length of pivotable member 141A is such a length that a distal end portion makes contact with a lower edge portion of inlet 112. Therefore, when pivotable member 141A is disposed at a position (first position shown in FIGS. 5 and 6) where the distal end portion is in contact with the lower edge portion of inlet 112, the air flows into first flow passage 110A.

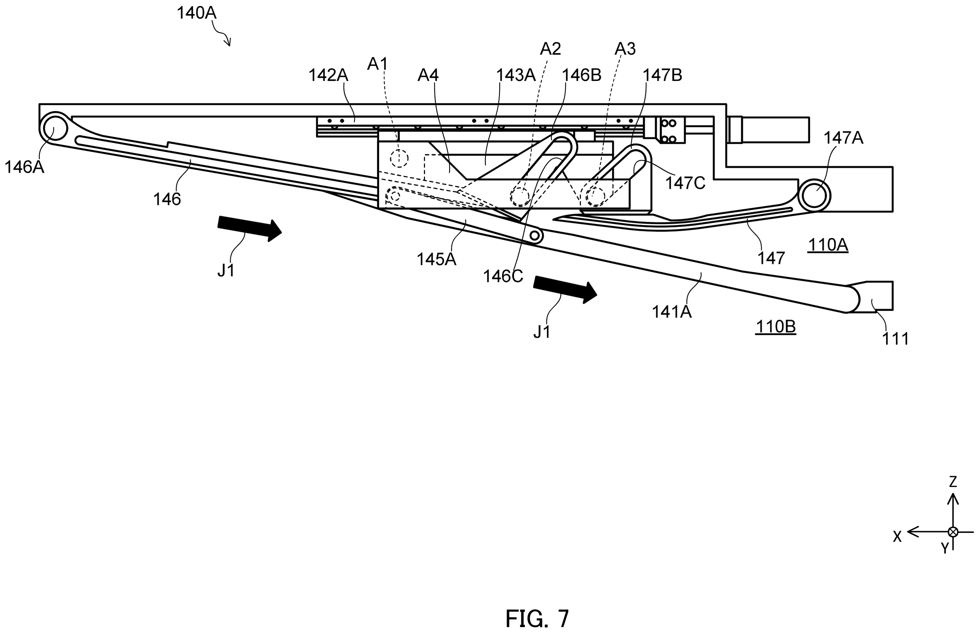

In addition, pivotable member 141A pivots to the + side (upper side) in the Z direction from the first position to come into contact with first facing member 146 described below. In other words, when pivotable member 141A is disposed at a position (second position shown in FIG. 7) where the distal end portion is in contact with first facing member 146, first flow passage 110A is closed.

Guide rail 142A is a rail member extending in the X direction, and is disposed on the + side in the Z direction with respect to pivotable member 141A in housing 110 and at a position facing pivotable member 141A. Guide rail 142A supports slide member 143A such that the slide member is capable of sliding movement in the X direction.

Slide member 143A is connected to actuator 144A, and slides on guide rail 142A based on an operation of actuator 144A. Actuator 144A may be any actuator, for example, of a known configuration or the like as long as it is configured to cause sliding movement of slide member 143A.

In addition, slide member 143A includes three shaft portions A1, A2, and A3. Shaft portions A1, A2, and A3 are provided to protrude from slide member 143A to the opposite sides in the Y direction. Shaft portion A1 is located on the most + side in the X direction among three shaft portions A1, A2, and A3. Shaft portion A2 is located on the - side in the X direction with respect to shaft portion A1. Shaft portion A3 is located on the most - side in the X direction among three shaft portions A1, A2, and A3.

Support member A4 is provided on tip portions of three shaft portions A1, A2, and A3. Support member A4 is configured in a plate shape, and is provided on each of the opposite sides of slide member 143A in the Y direction. Support member A4 supports link members 145A.

Link members 145A are a member that links pivotable member 141A and slide member 143A via support member A4. One end of each of link members 145A is connected to a portion of support member A4 on the - side in the Z direction with respect to shaft portion A1, and the other end is connected to a portion of pivotable member 141A other than the base end portion and the distal end portion.

Pivotable member 141A pivots in conjunction with the sliding movement of slide member 143A by link members 145A. That is, slide member 143A moves slidingly to cause pivotable member 141A to pivot between the first position and the second position.

Specifically, as shown in FIG. 6, when slide member 143A is located at a position on the - side in the X direction on guide rail 142A, pivotable member 141A is located at the first position. As shown in FIG. 7, when slide member 143A is moved from the position on the most - side in the X direction on guide rail 142A to the + side in the X direction, pivotable member 141A pivots from the first position to the second position on the + side in the Z direction by link members 145A.

First facing member 146 is configured in a plate shape, and is disposed at a position facing pivotable member 141A in housing 110. Specifically, first facing member 146 is supported at base end portion 146A at a portion on the + side in the X direction in housing 110 with respect to guide rail 142A, and is pivotable about base end portion 146A. In addition, first facing member 146 is disposed in an orientation along a direction inclined to be located on the - side in the X direction toward the - side in the Z direction. A distal end portion of first facing member 146 is located between pivotable member 141A and slide member 143A. Supported portion 146B supported by shaft portion A2 is provided at the distal end portion of first facing member 146.

Supported portion 146B extends in a direction inclined to be located on the - side in the X direction from the distal end portion of first facing member 146 to the + side in the Z direction. Long hole 146C is formed in supported portion 146B. Supported portion 146B is supported by shaft portion A2 by engagement between shaft portion A2 and long hole 146C.

In addition, when slide member 143A moves slidingly, shaft portion A2 slides in long hole 146C, and thus the orientation of first facing member 146 is changed in conjunction with the sliding movement of slide member 143A.

Specifically, as shown in FIG. 6, when pivotable member 141A is located at the first position, first facing member 146 is spaced from pivotable member 141A. As a result, first flow passage 110A is opened, and air J1 passes through the space between first facing member 146 and pivotable member 141A to enter first flow passage 110A. In this case, an upper edge of long hole 146C and shaft portion A2 are in an engaged state. In addition, in this state, the air passing through the - side in the Z direction of pivotable member 141A flows into second flow passage 110B.

As described above, when pivotable member 141A is located at the first position, first facing member 146 constitutes a part of first flow passage 110A with pivotable member 141A.

In addition, as shown in FIG. 7, when pivotable member 141A is located at the second position, first facing member 146 comes into contact with pivotable member 141A. In this case, the distal end portion of pivotable member 141A is spaced from the lower edge portion of inlet 112. As a result, first flow passage 110A is closed, and air J1 passes below first facing member 146 and pivotable member 141A to enter second flow passage 110B.

In this case, the lower edge of long hole 146C and shaft portion A2 are in an engaged state, and the orientation of first facing member 146 pivots to the + side in the Z direction from the position shown in FIG. 6. That is, the orientation of first facing member 146 is changed toward a side following the pivot motion of pivotable member 141A.

As described above, when pivotable member 141A is located at the second position, first facing member 146 can change the orientation to the side following the pivot motion of pivotable member 141A while being in contact with pivotable member 141A, and accordingly, pivotable member 141A can be easily positioned at a desired position.

Second facing member 147 is configured in a plate shape, and is disposed at a position facing pivotable member 141A in housing 110. Specifically, second facing member 147 is supported by base end portion 147A at a portion on the - side in the X direction in housing 110 with respect to guide rail 142A, and is pivotable about base end portion 147A. Second facing member 147 is disposed in an orientation along a direction inclined to be located on the + side in the X direction toward the - side in the Z direction, and a distal end portion of second facing member 147 is located between pivotable member 141A and slide member 143A. Supported portion 147B supported by shaft portion A3 is provided at the distal end portion of second facing member 147.

Supported portion 147B extends from the distal end portion of second facing member 147 toward the + side in the Z direction. Long hole 147C is formed in supported portion 147B. Supported portion 147B is supported by shaft portion A3 by engagement between shaft portion A3 and long hole 147C.

In addition, when slide member 143A moves slidingly, shaft portion A3 slides in long hole 147C, and thus the orientation of second facing member 147 is changed in conjunction with the sliding movement of slide member 143A.

Specifically, as shown in FIG. 6, when pivotable member 141A is located at the first position, second facing member 147 is spaced from pivotable member 141A. As a result, air J1 passes through a space between second facing member 147 and pivotable member 141A to enter further downstream into first flow passage 110A. In this case, an upper edge of long hole 147C and shaft portion A3 are in an engaged state.

As described above, when pivotable member 141A is located at the first position, second facing member 147 constitutes a part of first flow passage 110A with pivotable member 141A.

In addition, as shown in FIG. 7, when pivotable member 141A is located at the second position, second facing member 147 is located above pivotable member 141A. In this case, the lower edge of long hole 147C and shaft portion A3 are in an engaged state.

As described above, since second facing member 147 can change the posture when pivotable member 141A is located at the second position, interference by second facing member 147 with the movement of pivotable member 141A can be suppressed even when pivotable member 141A is moved from the first position to the second position.

In addition, as shown in FIG. 6, first facing member 146 and second facing member 147 are disposed in such an orientation that a second force in a direction canceling a first force applied to slide member 143A due to the air in first flow passage 110A acts on slide member 143A.

Since each of first facing member 146 and second facing member 147 and pivotable member 141A constitute a part of first flow passage 110A, the pressure due to air J1 entering first flow passage 110A is applied to each member. Since pivotable member 141A constitutes a wall of first flow passage 110A on the - side in the Z direction, pressure P1 is applied to pivotable member 141A in the direction toward the - side in the Z direction. Pressure P1 is a differential pressure between the both surfaces of pivotable member 141A.

Since pivotable member 141A is connected to slide member 143A via link members 145A, a force due to pressure P1 applied to pivotable member 141A acts on slide member 143A. Specifically, due to pressure P1, force F1 is applied to a connection portion between pivotable member 141A and link members 145A in the same direction (direction toward the - side in the Z direction) as pressure P1. Force F1 is a force obtained by performing an area integration of pressure P1.

In this case, since link members 145A is inclined to be located on the - side in the X direction toward the - side in the Z direction, force F2 in a direction along link members 145A is applied to link members 145A due to force F1. As a result, a horizontal component (direction toward the - side in the X direction) of force F2, that is, force F3 is applied to the connection portions between link members 145A and slide member 143A. That is, due to pressure P1 applied to pivotable member 141A, horizontal force F3 is applied to slide member 143A. A vertical component of force F2 at the connection portions between link members 145A and slide member 143A is constrained by guide rail 142A.

In addition, since first facing member 146 is disposed along a direction inclined to be located on the - side in the X direction toward the - side in the Z direction, first flow passage 110A is narrowed toward the - side in the X direction. As a result, air J1 flowing through first flow passage 110A at a supersonic speed is compressed by the shock wave. Due to the compression of air J1, the compressed air flows from a gap on the - side of first facing member 146 in the X direction to the + side in the Z direction, and thus pressure P2 in a direction (direction inclined to be located on the + side in the X direction toward the - side in the Z direction) of reducing first flow passage 110A is applied to first facing member 146. Pressure P2 is a differential pressure between the both surfaces of first facing member 146.

In addition, since supported portion 146B of first facing member 146 is in contact with shaft portion A2 of slide member 143A, force F4 in a direction parallel to pressure P2 is applied to a portion of shaft portion A2 of slide member 143A. Therefore, a horizontal component (direction toward the + side in the X direction) of force F4, that is, force F5 is applied to the portion of shaft portion A2 of slide member 143A. That is, due to pressure P2 applied to first facing member 146, horizontal force F5 is applied to slide member 143A. Force F5 is a force obtained by performing an area integration of pressure P2. A vertical component of force F4 at the portion of shaft portion A2 of slide member 143A is constrained by guide rail 142A.

Since force F5 is a force in a direction opposite to force F3 due to pressure P1 applied to pivotable member 141A, force F5 is a force that cancels force F3.

In addition, since second facing member 147 is disposed along a direction inclined to be located on the + side in the X direction toward the - side in the Z direction, first flow passage 110A is widened toward the - side in the X direction. As a result, the speed of air J1 flowing through first flow passage 110A at a speed of sound or less is reduced, and the pressure is increased. Due to the increase in the pressure of air J1, pressure P3 in a direction (direction inclined to be located on the + side in the X direction toward the + side in the Z direction) of expanding first flow passage 110A is applied to second facing member 147. Pressure P3 is a differential pressure between the both surfaces of second facing member 147.

In addition, since supported portion 147B of second facing member 147 is in contact with shaft portion A3 of slide member 143A, force F6 in a direction parallel to pressure P3 is applied to a portion of shaft portion A3 of slide member 143A. Therefore, a horizontal component (direction toward the + side in the X direction) of force F6, that is, force F7 is applied to the portion of shaft portion A3 of slide member 143A. That is, due to pressure P3 applied to second facing member 147, horizontal force F7 is applied to slide member 143A. Force F7 is a force obtained by performing an area integration of pressure P3. A vertical component of force F6 at the portion of shaft portion A3 of slide member 143A is constrained by guide rail 142A.

Since force F7 is a force in a direction opposite to force F3 caused by pressure P1 applied to pivotable member 141A, force F7 is a force that cancels force F3.

From the above, in first switching section 140A, due to pressure P1 applied to pivotable member 141A, horizontal force F3 is applied to slide member 143A. On the other hand, due to pressures P2 and P3 applied to first facing member 146 and second facing member 147, forces F5 and F7 that cancel force F3 are applied to slide member 143A. That is, horizontal force F3 applied to slide member 143A due to pivotable member 141A can be reduced by first facing member 146 and second facing member 147.

Next, details of second switching section 140B will be described.

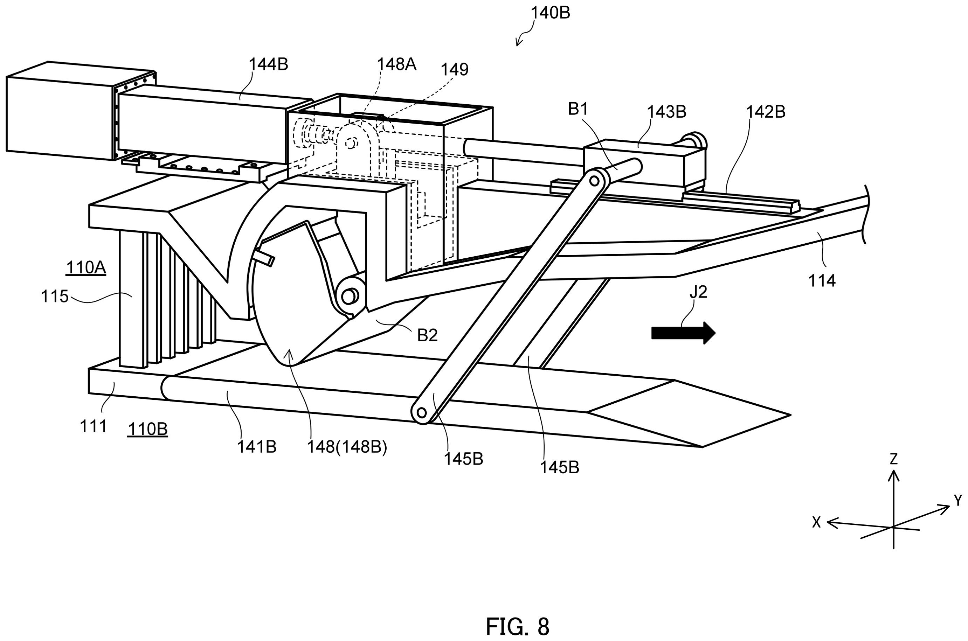

As shown in FIG. 3, second switching section 140B is disposed on the + side in the Z direction with respect to isolation wall 111 and on the - side in the X direction with respect to first engine 120 in housing 110. As shown in FIG. 8, second switching section 140B includes pivotable member 141B, guide rail 142B, slide member 143B, actuator 144B, link members 145B, and facing member 148.

Pivotable member 141B is supported to be pivotable about a base end portion at a rear end portion (end portion on the - side in the X direction) of isolation wall 111.

In addition, flow passage forming wall 114 is provided on the + side in the Z direction with respect to isolation wall 111 and pivotable member 141B in housing 110. Flow passage forming wall 114 extends from a portion corresponding to fuel injector 115 provided at the rear end portion of isolation wall 111 to the - side in the X direction, and is connected to an upper edge of outlet 113. Fuel injector 115 is a portion configured to further inject fuel into the combustion gas jetted from first engine 120.

Flow passage forming wall 114 is disposed to face pivotable member 141B, and constitutes a part of the first flow passage with pivotable member 141B.

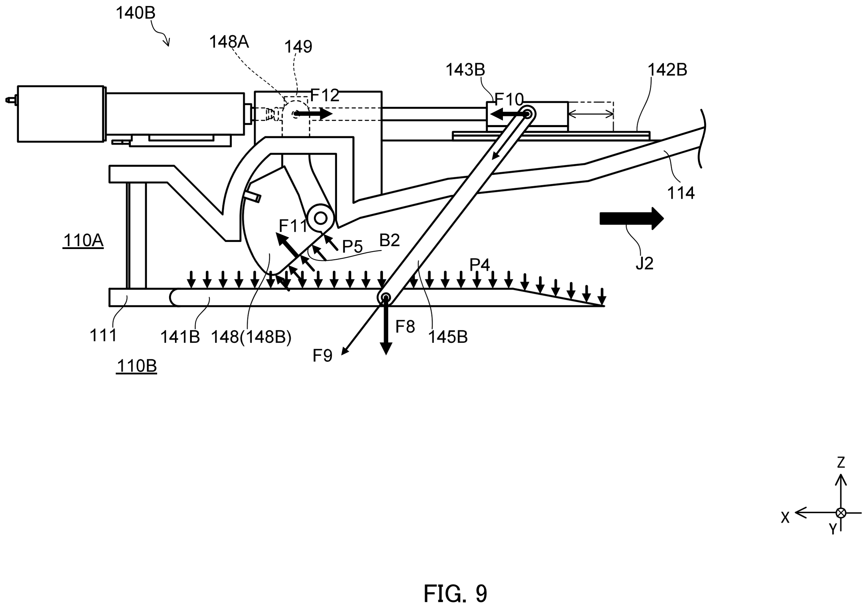

In addition, pivotable member 141B is disposed at a position (third position shown in FIGS. 8 and 9) where pivotable member 141B pivots to the - side (lower side) in the Z direction to open first flow passage 110A.

Guide rail 142B is a rail member extending in the X direction, and is disposed on a side opposite to pivotable member 141B in flow passage forming wall 114. Guide rail 142B supports slide member 143B to be slidable in the X direction.

Slide member 143B is connected to actuator 144B, and slides on guide rail 142B based on an operation of actuator 144B. Actuator 144B may be any actuator as long as it is configured to slide slide member 143B, for example, a known configuration or the like.

In addition, slide member 143B includes one shaft portion B1. Shaft portion B1 is provided to protrude from slide member 143B to both sides in the Y direction. Each tip portion of shaft portion B1 supports link members 145B.

Link members 145B are a member that links pivotable member 141B and slide member 143B. One end of each of link members 145B is connected to shaft portion B1, and the other end is connected to a portion of pivotable member 141B other than the base end portion and the distal end portion.

Pivotable member 141B pivots in conjunction with the sliding movement of slide member 143B by link members 145B. That is, slide member 143B causes pivotable member 141B to pivot between the third position and the fourth position by sliding.

Specifically, as shown in FIG. 9, when slide member 143B is located near an end portion of guide rail 142B on the + side in the X direction, pivotable member 141B is located at the third position. As a result, first flow passage 110A is opened, and air J2 that has passed through the gap of fuel injector 115 is discharged to the outside of housing 110.

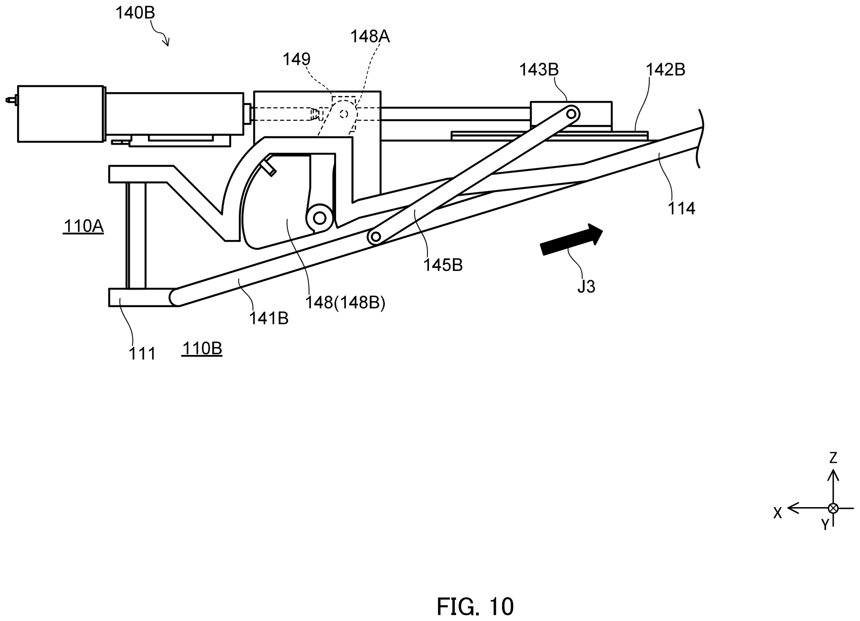

In addition, when slide member 143B is moved from the position (position shown in FIG. 9) near the end portion of guide rail 142B on the + side in the X direction to a position (position shown in FIG. 10) near an end portion on the - side in the X direction, as shown in FIG. 10, pivotable member 141B pivots from the third position to the fourth position in the + side in the Z direction by link members 145B. As a result, air J3 flowing through second flow passage 110B passes below pivotable member 141B and is discharged to the outside of housing 110.

Facing member 148 is disposed at a position facing pivotable member 141B, and includes supported portion 148A and facing section 148B. Supported portion 148A is supported to be pivotable on movement member 149 connected to actuator 144B. Movement member 149, together with slide member 143B, is connected to a portion of actuator 144B that linearly moves. Movement member 149 is located on the + side in the X direction with respect to slide member 143B.

Facing section 148B is connected to supported portion 148A and is disposed at a position facing pivotable member 141B. A facing surface of facing section 148B facing pivotable member 141B is inclined surface B2 inclined to be located on the + side in the Z direction toward the - side in the X direction.

When pivotable member 141B is located at the third position, pivotable member 141B and inclined surface B2 constitute a part of first flow passage 110A.

The length of pivotable member 141B is such a length that a distal end portion makes contact with flow passage forming wall 114. Therefore, when disposed at a position (fourth position shown in FIG. 10) where the distal end portion is in contact with flow passage forming wall 114, pivotable member 141B closes first flow passage 110A, and forms a wall surface of second flow passage 110B on the + side in the Z direction.

In addition, as shown in FIG. 10, when movement member 149 is moved to the - side in the X direction together with slide member 143B, facing section 148B pivots to the + side in the Z direction and the + side in the X direction about supported portion 148A. That is, the orientation of facing member 148 is changed.

As described above, even when pivotable member 141B is moved to the side where first flow passage 110A is closed, the orientation of facing member 148 is changed, and therefore, interference by facing member 148 with the movement of pivotable member 141B can be suppressed.

In addition, facing member 148 is disposed in such an orientation that a second force in a direction canceling a first force applied to slide member 143B due to the air in first flow passage 110A acts on slide member 143B.

As shown in FIG. 9, since pivotable member 141B constitutes a wall of first flow passage 110A on the - side in the Z direction, pressure P4 is applied to pivotable member 141B in a direction toward the - side in the Z direction. Pressure P4 is a differential pressure between the both surfaces of pivotable member 141B.

Since pivotable member 141B is connected to slide member 143B via link members 145B, pressure P4 applied to pivotable member 141B affects slide member 143B. Specifically, due to pressure P4, force F8 is applied to a connection portion between pivotable member 141B and link members 145B in the same direction (direction toward the - side in the Z direction) as pressure P4.

In this case, since link members 145B is inclined to be located on the + side in the X direction toward the - side in the Z direction, force F9 in a direction inclined to be located on the + side in the X direction toward the - side in the Z direction is applied to link members 145B due to force F8. As a result, a horizontal component (direction toward the + side in the X direction) of force F9, that is, force F10 is applied to the connection portions between link members 145B and slide member 143B. That is, due to pressure P4 applied to pivotable member 141B, horizontal force F10 is applied to slide member 143B. Force F10 is a force obtained by performing an area integration of pressure P4. A vertical component of force F9 at the connection portions between link members 145B and slide member 143B is constrained by guide rail 142B.

In addition, since the facing surface of facing member 148 facing pivotable member 141B is inclined surface B2 inclined to be located on the + side in the Z direction toward the - side in the X direction, first flow passage 110A is widened toward the - side in the X direction. As a result, pressure P5 of the air flowing through first flow passage 110A is applied.

In addition, force F11 in a direction parallel to pressure P5 is applied to facing member 148. In addition, since supported portion 148A is in contact with movement member 149 connected to actuator 144B to which slide member 143B is connected, horizontal force F12 is applied to the connection portion between movement member 149 and the facing member due to a moment generated around a rotation axis of the facing member by force F11. That is, due to pressure P5 applied to facing member 148, horizontal force F12 is applied to movement member 149. Force F11 is a force obtained by performing an area integration of pressure P5.

Since force F12 is a force in a direction opposite to force F10 caused by pressure P4 applied to pivotable member 141B, force F12 is a force that cancels force F10.

From the above, in second switching section 140B, due to pressure P4 applied to pivotable member 141B, horizontal force F10 is applied to slide member 143B. On the other hand, due to pressure P5 applied to facing member 148, force F12 that cancels force F10 is applied to slide member 143B via movement member 149. That is, horizontal force F10 due to pivotable member 141B applied to slide member 143B can be reduced by facing member 148.

According to Embodiment 1 configured as described above, the pivotable members pivot between the first position and the second position or between the third position and the fourth position by the sliding movement of the slide members. That is, since the slide members assist the pivot motion of the pivotable members, the pivotable members can pivot smoothly, and as a result, the switching of the flow passage can be smoothly performed.

In addition, since the slide members move on the guide rails and pivot the pivotable members via the link members, the pivotable members can pivot smoothly in conjunction with the movement of the slide members while the slide members are smoothly moved.

In addition, since the facing members are provided to be capable of changing the orientation in conjunction with the movement of the slide members, the facing members can constitute a part of the first flow passage in relation to the pivotable members, and can suppress interference with the movement of the pivotable members by changing the orientation in a case of closing the first flow passage.

In addition, the facing members are disposed in orientations in which second forces in directions canceling first forces applied to the slide members due to the aerodynamic force of the first flow passage act on the slide members based on the pressure. As a result, the horizontal forces due to the pivotable members applied to the slide members can be reduced by the facing members.

In addition, since the surface of airframe 10 from the nose section of airframe 10 to combined engine 100 on the lower surface of airframe 10 is inclined to be located lower from the nose section toward combined engine 100, the flow passage of the air flowing into combined engine 100 is narrowed as it approaches combined engine 100.

Therefore, the air flowing into housing 110 of combined engine 100 can be compressed.

Meanwhile, the pressure of the air is increased by the shock wave generated at the leading edge of airframe 10, and the lower surface of airframe 10 can thus receive a lift. On the other hand, when the inclination angle of the lower surface is relatively large, the lower surface may be affected by the drag based on the shock wave.

In the present embodiment, the angle of the surface of airframe 10 from the nose section of airframe 10 to combined engine 100 on the lower surface of airframe 10 with respect to the horizontal direction is smaller than the angle, with respect to the horizontal direction, of a line connecting the nose section of airframe 10 to the lower edge portion of inlet 112 for the air of combined engine 100.

That is, since the angle of the aforementioned surface with respect to the horizontal direction can be minimized, the benefit of the lift based on the shock wave can be obtained while the influence of the drag can be minimized.

In addition, when the shock wave generated at the leading edge of airframe 10 hits the lower edge portion of inlet 112 of combined engine 100, the efficiency of the inflow of the air into combined engine 100 is improved. However, the angle (direction) of the shock wave generated according to the speed of aircraft 1 is different. Therefore, housing 110 may be set such that the line connecting the nose section of airframe 10 to the lower edge portion of inlet 112 for the air of combined engine 100 matches the shock wave generated at, for example, the maximum speed or the high-frequency speed.

Next, Embodiment 2 of the present disclosure is described below. In Embodiment 1, first engine 120 and second engine 130 are accommodated in housing 110 in the Z direction via isolation wall 111. In Embodiment 2, the first engine and the second engine may be accommodated in the housing in the X direction.

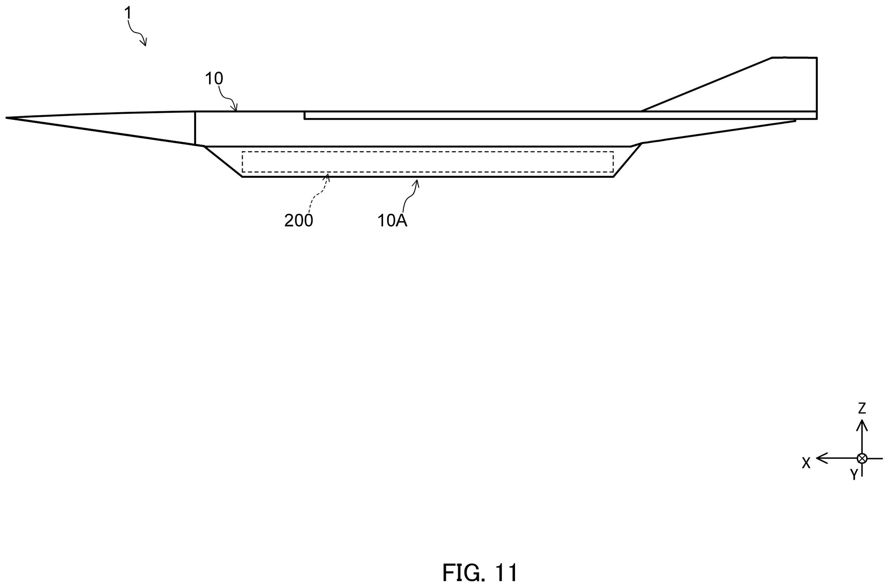

As shown in FIG. 11, aircraft 1 according to Embodiment 2 includes airframe 10 and combined engine 200. The configuration of aircraft 1 other than combined engine 200 may be the same as that of Embodiment 1.

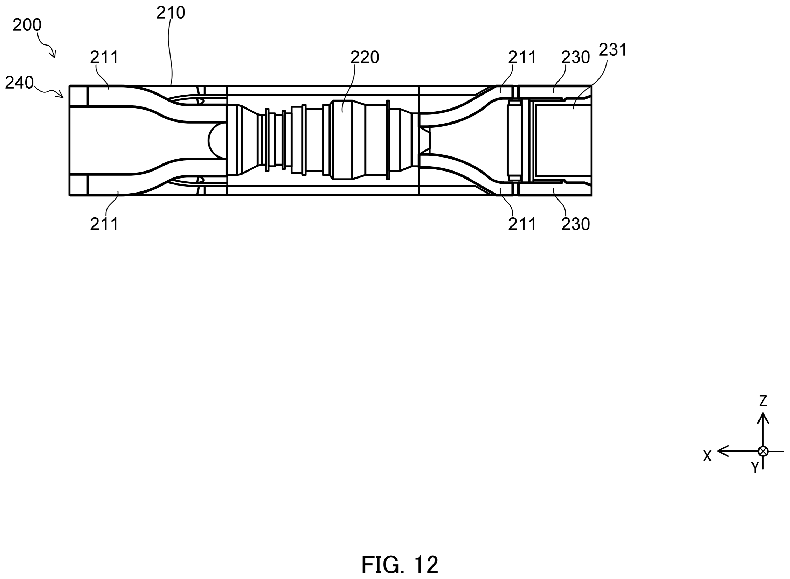

Combined engine 200 is accommodated in engine housing portion 10A provided on the surface of airframe 10 on the - side in the Z direction. As shown in FIG. 12, combined engine 200 includes housing 210, turbojet 220, ram combustor 230, and switching section 240.

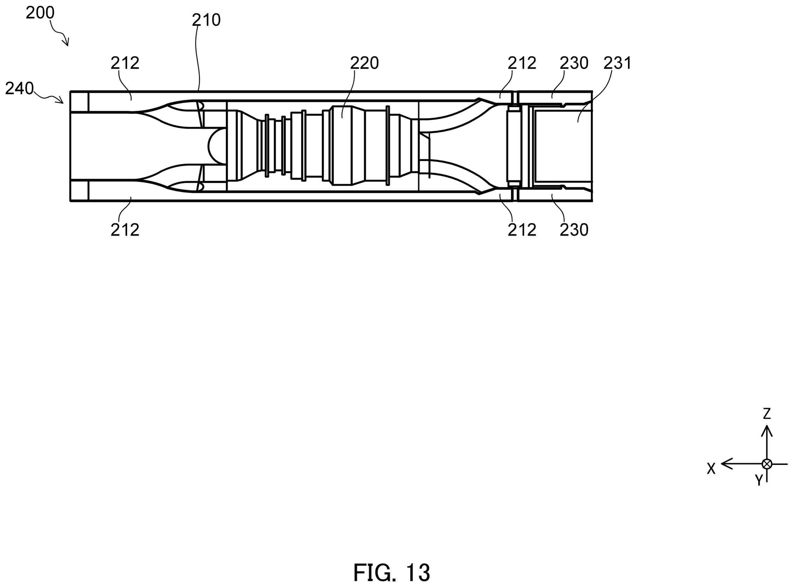

Housing 210 is configured in a tubular shape extending in the X direction. Turbojet 220 and ram combustor 230 are accommodated in housing 210. In addition, as shown in FIGS. 12 and 13, housing 210 is provided with first ducts 211 and second ducts 212.

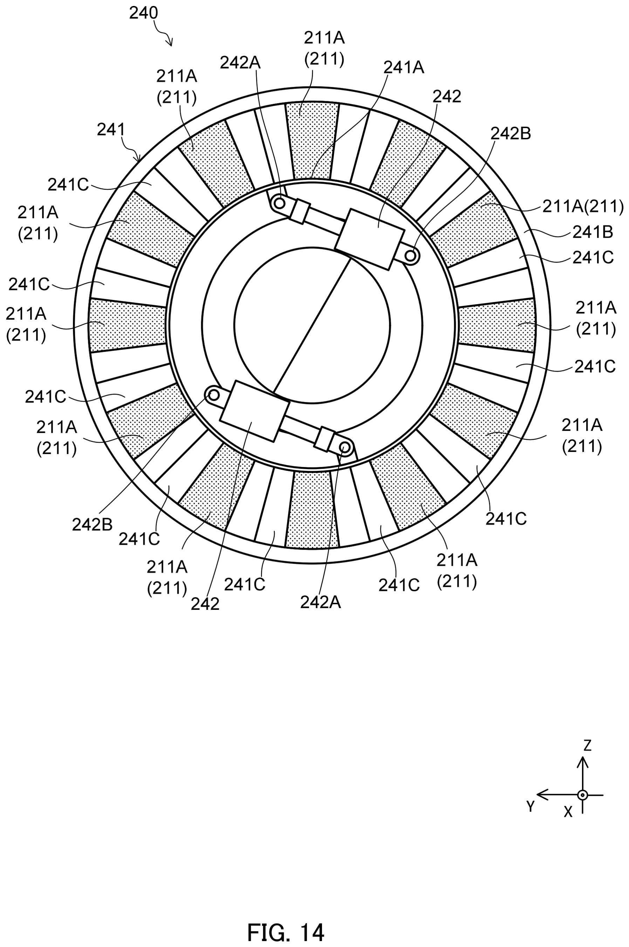

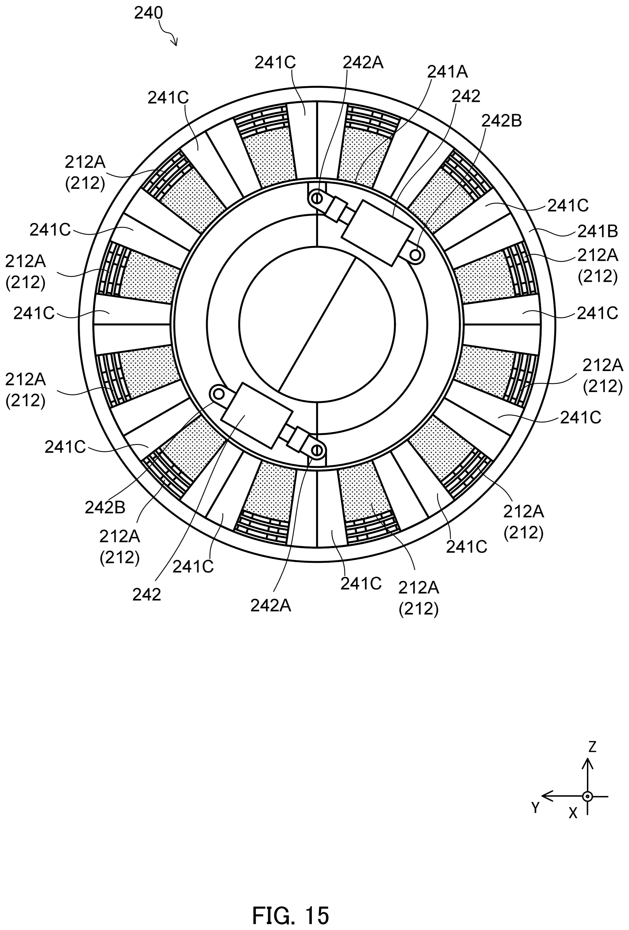

First ducts 211 and second ducts 212 are ducts constituting a flow passage of the air taken into housing 210, and are configured to extend in the X direction. First ducts 211 and second ducts 212 are disposed at different positions in the circumferential direction of a circle forming the leading end surface (end surface in the X direction) of housing 210 (see also FIGS. 14 and 15). A plurality of first ducts 211 and second ducts 212 are provided, and first ducts 211 and second ducts 212 are disposed to be alternately arranged.

Turbojet 220 is disposed at a middle portion of housing 210 in the X direction. Ram combustor 230 is disposed at an end portion of housing 210 on the - side in the X direction. In addition, switching section 240 is disposed at an end portion of housing 210 on the + side in the X direction.

First ducts 211 extend from switching section 240 toward turbojet 220, and are a duct that can introduce air into turbojet 220. In addition, first ducts 211 include portions connecting turbojet 220 to ram combustor 230. That is, the air introduced into first ducts 211 is introduced into turbojet 220 and is discharged from the end portion of housing 210 on the - side in the X direction through ram combustor 230.

First ducts 211 are applied when the turbojet is operating, during which the speed range of aircraft 1 is the first speed range (for example, Mach 0 to Mach 2). When the turbojet is operating, the rotary electric generator connected to turbojet 220 operates, and power is supplied to airframe 10. Turbojet 220 and ram combustor 230 correspond to the "first engine" in Embodiment 2. First ducts 211 corresponds to the "first flow passage" in Embodiment 2.

Second ducts 212 extend directly from switching section 240 toward ram combustor 230, and are a duct that can directly introduce air into ram combustor 230. The air introduced into second ducts 212 is discharged from the end portion of housing 210 on the - side in the X direction through ram combustor 230.

Second ducts 212 are applied when the ramjet is operating, during which the speed range of aircraft 1 is the second speed range (for example, Mach 2 to Mach 5) and. When the ramjet is operating, fuel cell 231 disposed near ram combustor 230 generates power, and power is supplied to airframe 10. Ram combustor 230 corresponds to the "second engine" in Embodiment 2. Second ducts 212 correspond to the "second flow passage" in Embodiment 2.

As shown in FIG. 14, switching section 240 switches between opening and closing of first inlets 211A for the air in first ducts 211 and second inlets 212A for the air in second ducts 212. Switching section 240 includes pivotable member 241 and slide members 242.

Pivotable member 241 is a member that is pivotable, and includes inner annular portion 241A, outer annular portion 241B, and closing portions 241C.

Inner annular portion 241A and outer annular portion 241B are configured in an annular shape. Inner annular portion 241A is disposed inside outer annular portion 241B and is configured to have a smaller diameter than outer annular portion 241B. Outer annular portion 241B is configured to have a diameter substantially the same as the diameter of the circle of the leading end portion of housing 210.

Closing portions 241C connect inner annular portion 241A and outer annular portion 241B, and are configured to be capable of closing any one of first inlets 211A and second inlets 212A. A plurality of closing portions 241C are provided. The number of closing portions 241C is set to a number corresponding to the number of first ducts 211 or the number of second ducts 212.

In Embodiment 2, since the number of first ducts 211 and the number of second ducts 212 are each 12, the number of closing portions 241C is set to 12. The number of first ducts 211, the number of second ducts 212, and the number of closing portions 241C can be appropriately set to a number of 1 or more.

In addition, each of closing portions 241C has a shape in which a middle portion of a plate-shaped member is bent, specifically, a shape that is tapered toward the + side in the X direction. With such a configuration, when the air flow is formed, the pressure applied to the two surfaces sandwiching the middle portion is the same, and the component (axial component) of the pressure in the X direction is received by a bearing of pivotable member 241. In addition, the components of the pressure in the pivot direction are opposite to each other on the two surfaces and are canceled out.

As a result, a force having a component in the pivot direction that is sufficiently reduced by being canceled out by each surface is applied to slide members 242. That is, in Embodiment 2, the force applied to slide members 242 can be sufficiently reduced.

The plurality of closing portions 241C are disposed at positions corresponding to first inlets 211A or second inlets 212A. Specifically, as shown in FIG. 14, the plurality of closing portions 241C can open all of the plurality of first inlets 211A and close all of the plurality of second inlets 212A. In addition, as shown in FIG. 15, the plurality of closing portions 241C can close all of the plurality of first inlets 211A and open all of the plurality of second inlets 212A.

Slide members 242 are, for example, an extendable and contractible actuator. For example, two slide members 242 are provided. Two slide members 242 are disposed symmetrically with respect to the center of the circle constituting pivotable member 241.

The number of slide members 242 can be appropriately set to a number of 1 or more. In addition, when the number of slide members 242 is two or more, slide members 242 may be disposed at equal intervals such that the force is uniformly applied to pivotable member 241.

One end portion 242A of each of slide members 242 is connected to inner annular portion 241A of pivotable member 241. Other end portion 242B of slide member 242 is connected to, for example, any fixed portion of housing 210. That is, each slide member 242 pivots pivotable member 241 by extending and contracting one end portion 242A with other end portion 242B as a fulcrum.

For example, as shown in FIG. 14, when one end portions 242A of slide members 242 are located at a position where one end portions 242A are relatively greatly extended, closing portions 241C are located at a position (first position) corresponding to second inlets 212A and closes second inlets 212A. Since first inlets 211A are in an open state, the air is introduced into first ducts 211 through first inlets 211A.

In addition, as shown in FIG. 15, when one end portions 242A of slide members 242 are located at a position where one end portions 242A are relatively greatly contracted, closing portions 241C are located at a position (second position) corresponding to first inlets 211A and closes first inlets 211A. Since second inlets 212A are in an open state, the air is introduced into second ducts 212 through second inlets 212A.

According to Embodiment 2 configured as described above, pivotable member 241 pivots between the first position and the second position by the sliding movement of slide members 242. Specifically, in a case of opening first ducts 211, pivotable member 241 pivots by the sliding movement of slide members 242, and closing portions 241C move to a position where second ducts 212 (second inlets 212A) are closed. In addition, in a case of opening second ducts 212, pivotable member 241 pivots by the sliding movement of slide members 242, and closing portions 241C move to a position where first ducts 211 (first inlets 211A) are closed.

That is, in Embodiment 2, the switching of the flow passage can be smoothly performed by a simple configuration.

In addition, since the configuration can sufficiently reduce the force applied to slide members 242 due to the pressure applied to pivotable member 241, the switching of the flow passage can be performed more smoothly.

In addition, combined engine 200 according to Embodiment 2 may be accommodated in housing 110 of combined engine 100 according to Embodiment 1. In this case, for example, combined engine 200 may be accommodated in the space (first flow passage 110A) in housing 110 where first engine 120 is accommodated.

In addition, in the above-described embodiments, the airframe of the aircraft is configured to have a substantially triangular shape, but the present disclosure is not limited to this, and the airframe of the aircraft need not be configured to have a substantially triangular shape.

In addition, in the above-described embodiments, the aircraft is a hypersonic aircraft, but the present disclosure is not limited to this, and the aircraft may be, for example, a supersonic aircraft or an aircraft that does not correspond to supersonic speed.

The embodiments above are no more than specific examples in carrying out the present disclosure, and the technical scope of the present disclosure is not to be construed in a limitative sense due to the specific examples. That is, the present disclosure can be implemented in various forms without departing from its spirit or key features.

The disclosure of Japanese Patent Application No. 2023-109294, filed on July 3, 2023, including the specification, drawings and abstract, is incorporated herein by reference in its entirety.

### Industrial Applicability

The apparatus of the present disclosure is useful as a combined engine and an aircraft capable of smoothly switching a flow passage.

### Reference Signs List

1 Aircraft
10 Airframe
11 Fuselage section
12 Main wing
13 Control wing
14 Outer wing
15 Vertical tail wing
100 Combined engine
110 Housing
111 Isolation wall
112 Inlet
113 Outlet
120 First engine
130 Second engine
140 Switching section
140A First switching section
140B Second switching section
141A Pivotable member
141B Pivotable member
142A Guide rail
142B Guide rail
143A Slide member
143B Slide member
144A Actuator
144B Actuator
145A Link member
145B Link member
146 First facing member
147 Second facing member
148 Facing member
200 Combined engine
210 Housing
211 First duct
211A First inlet
212 Second duct
212A Second inlet
220 Turbojet
230 Ram combustor
240 Switching section
241 Pivotable member
241A Inner annular portion
241B Outer annular portion
241C Closing portion
242 Slide member
242A One end portion
242B Other end portion

## Claims

1. A combined engine to be mounted on an aircraft, the combined engine comprising:
a first engine corresponding to a first speed range;
a second engine corresponding to a second speed range higher than the first speed range;
a flow passage section including a first flow passage that is an air flow passage of the first engine and a second flow passage that is an air flow passage of the second engine; and
a switching section capable of switching between opening and closing of the first flow passage in the flow passage section, wherein
the switching section includes:
a pivotable member that is pivotable between a first position where the first flow passage is opened and a second position where the first flow passage is closed, and
a slide member that moves slidingly to pivot the pivotable member between the first position and the second position.

2. The combined engine according to claim 1, wherein:
the pivotable member is configured to be pivotable about a base end portion, and
the switching section includes:
a guide rail that extends in a predetermined direction and on which the slide member moves slidingly, and
a link member that links the slide member with a portion of the pivotable member other than the base end portion so as to pivot the pivotable member by movement of the slide member.

3. The combined engine according to claim 2, wherein:
the flow passage section is configured as a housing including the first engine, the second engine, and the switching section,
the flow passage section includes an isolation wall that isolates the first engine and the second engine from each other, and
the isolation wall supports the base end portion such that the pivotable member is pivotable.

4. The combined engine according to claim 3, wherein
the switching section is provided at each of an air inlet of the flow passage section and an air outlet of the flow passage section.

5. The combined engine according to claim 2, further comprising:
a facing member that is disposed at a position facing the pivotable member and that constitutes a part of at least one flow passage of the first flow passage and the second flow passage between the facing member and the pivotable member, wherein
the facing member is disposed on the slide member to be capable of changing its orientation in conjunction with the movement of the slide member.

6. The combined engine according to claim 5, wherein
the facing member is disposed in such an orientation that a second force in a direction canceling a first force applied to the slide member due to air in the at least one flow passage acts on the slide member.

7. The combined engine according to claim 1, further comprising:
a tubular housing that includes the first engine, the second engine, and the flow passage section, wherein
a first inlet of air in the first flow passage and a second inlet of air in the second flow passage are disposed in a leading end portion of the housing at different positions, and
the pivotable member includes a closing portion that is capable of closing any one of the first inlet and the second inlet.

8. The combined engine according to claim 7, wherein
one end of the slide member is attached to the pivotable member, and the slide member pivots the pivotable member by extending and contracting.

9. The combined engine according to claim 1, wherein
the aircraft is a supersonic aircraft.

10. The combined engine according to claim 9, wherein
the aircraft is a hypersonic aircraft.

11. An aircraft, comprising:
an airframe; and
the combined engine according to claim 1 that is provided on a lower surface of the airframe, wherein
a surface of the lower surface of the airframe which extends from a nose section of the airframe to the combined engine is inclined to be located lower toward the combined engine from the nose section.

12. The aircraft according to claim 11, wherein
an angle of the surface with respect to a horizontal direction is smaller than an angle, with respect to the horizontal direction, of a line connecting the nose section of the airframe and a lower edge portion of an air inlet of the combined engine.
